(19) Europäisches Patentamt
European Patent Office
Office européen des brevets

(11) **EP 3 884 006 B1**

(12) **EUROPÄISCHE PATENTSCHRIFT**

(45) Veröffentlichungstag und Bekanntmachung des Hinweises auf die Patenterteilung:
**26.10.2022   Patentblatt 2022/43**

(21) Anmeldenummer: **19805939.6**

(22) Anmeldetag: **15.11.2019**

(51) Internationale Patentklassifikation (IPC):
**C09J 7/40** *(2018.01)*      **C09J 7/00** *(2018.01)*
**C09J 7/38** *(2018.01)*

(52) Gemeinsame Patentklassifikation (CPC):
**C09J 7/401; C09J 7/00; C09J 7/38;** C09J 2483/005

(86) Internationale Anmeldenummer:
**PCT/EP2019/081467**

(87) Internationale Veröffentlichungsnummer:
**WO 2020/104317 (28.05.2020 Gazette 2020/22)**

(54) **ZUSAMMENSETZUNG FÜR EINE TRENNBESCHICHTUNG MIT NIEDRIGEM REIBUNGSKOEFFIZIENTEN**

COMPOSITION FOR A RELEASE COATING WITH A LOW FRICTION-COEFFICIENT

COMPOSITION POUR UN REVÊTEMENT DE SÉPARATION À FAIBLE COEFFICIENT DE FROTTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.11.2018   DE 102018220200**

(43) Veröffentlichungstag der Anmeldung:
**29.09.2021   Patentblatt 2021/39**

(73) Patentinhaber: **tesa SE**
**22848 Norderstedt (DE)**

(72) Erfinder:
• **WINKLER, Tobias**
  **22145 Hamburg (DE)**
• **SOMMER, Birgit**
  **22846 Norderstedt (DE)**

(74) Vertreter: **tesa SE**
**Hugo-Kirchberg-Straße 1**
**22848 Norderstedt (DE)**

(56) Entgegenhaltungen:
**EP-A1- 3 275 961      WO-A1-2010/061967**

**Beschreibung**

Die vorliegende Erfindung betrifft additionsvernetzende Silikonzusammensetzungen, welche mindestens ein spezielles Alkylsilan enthalten und einen verringerten Reibungskoeffizienten, einen begrenzten Silikonübertrag sowie eine glatte Oberflächenstruktur aufweisen. Weiterhin betrifft die vorliegende Erfindung einen Releaseliner, welcher die vernetzte Silikonzusammensetzung enthält sowie ein Klebeband, bei welchem die Haftklebemasse ein- oder beidseitig mit dem erfindungsgemäßen Releaseliner bedeckt ist. Schließlich betrifft die vorliegende Erfindung die Verwendung von speziellen Alkylsilanen in Silikon-haltigen Releaselinern zur Verringerung des Reibungskoeffizienten der Trennschicht.

**Stand der Technik**

Klebebänder, welche ein- oder beidseitig mit Klebstoffen beschichtet sind, werden am Ende des Herstellungsprozesses zumeist zu einer Rolle in Form einer archimedischen Spirale aufgewickelt. Um zu verhindern, dass die Klebemassen miteinander in Kontakt kommen oder auf dem Träger verkleben sind im Stand der Technik verschiedene Vorgehensweisen bekannt. Zum einen können Klebemassen verwendet werden, welche unterschiedlich starke Adhäsionen aufweisen und sich daher selbst nach direktem Kontakt erneut voneinander ablösen lassen (siehe US 6 274 213 B1). Zum anderen können die Klebebänder vor dem Wickeln auf ein Abdeckmaterial (auch als Trennmaterial bezeichnet) aufgebracht werden, welches zusammen mit dem Klebeband aufgewickelt wird. Dem Fachmann sind derartige Abdeckmaterialien unter den Namen Releaseliner oder Liner bekannt. Neben der Abdeckung von ein- oder doppelseitig klebenden Klebebändern werden Liner auch zur Eindeckung von Etiketten eingesetzt. Es sind auch Klebebänder möglich, bei denen nicht mit zwei Linern, sondern mit einem einzigen doppelseitig trennend ausgerüstet Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners. Dies ist insbesondere bei einer benachbarten Windung auf einem Ballen oder einer Rolle der Fall.

Der Liner (Trennpapier, Trennfolie) ist nicht Bestandteil eines Klebebandes oder Etiketts, sondern nur ein Hilfsmittel zu dessen Herstellung, Lagerung oder für die Weiterverarbeitung durch z.B. Stanzen. Wird ein doppelseitig klebendes, mit einem Liner ausgerüstetes Klebeband abgerollt, wird es normalerweise mit der offenen, also linerfreien, Haftklebemassenseite auf einen Untergrund aufgeklebt. Die andere Haftklebemassenseite haftet währenddessen auf der beschichteten Oberfläche des Liners noch in genügendem Maße, um die Handhabung des Klebebands zu ermöglichen. Allerdings muss der Liner vom Klebeband abziehbar sein, um eine Verklebung auf der zweiten Seite des doppelseitigen Klebebandes zu ermöglichen. Daher darf der Liner im Gegensatz zu einem Klebebandträger nicht fest mit der Klebstoffschicht des Klebebandes oder Etiketts verbunden sein. Weiterhin darf durch den Liner selbst oder durch das Abziehen des Liners die Klebkraft der Haftklebemasse nicht wesentlich für die spätere Verwendung beeinträchtigt werden. Gleichzeitig ist die Stabilität der Trennwirkung der Trennbeschichtung auf dem Liner, also die Abhäsivität, über lange Zeiträume wichtig, um die Funktion dieser Beschichtung sowie die Eigenschaften der mit dem Liner eingedeckten Haftklebemasse zu gewährleisten.

Ein Liner nach dem Stand der Technik besteht aus zumindest einer abhäsiven Schicht, auch als "Trennschicht" bezeichnet, um die Adhäsionsneigung von adhärierenden Produkten gegenüber diesen Oberflächen zu verringern (trennwirksame Funktion). Diese Schicht kann auf einem Trägermaterial aufgebracht sein. Als Trägermaterial des Liners können insbesondere Papiere oder Folien eingesetzt werden. Als Folien werden dabei bevorzugt solche aus biaxial verstrecktem Polyethylenterephthalat, Polybuten, Polypropylen, Polyethylen, monoaxial verstrecktem Polypropylen, biaxial verstrecktem Polypropylen oder Polyethylen verwendet, besonders vorzugsweise Polyolefinfolien (Polypropylen- und Polyethylenfolien) oder Polyesterfolien. Auch polymerbeschichtete Papiere oder Vliese sind anzutreffen.

Als Trennschicht eingesetzt werden können alle dem Fachmann bekannten Systeme, insbesondere solche, welche im "Handbook of Pressure Sensitive Adhesive Technology" von Donatas Satas (Satas & Associates, Warwick 1999) genannt sind. Das Material der abhäsiven Trennschicht ist nach dem Stand der Technik bevorzugt ausgewählt aus der Gruppe umfassend Silikone, fluorierte Silikone, Silikon-Copolymere, Wachse, Carbamate, Fluorpolymere, mit hydrophoben Seitenketten ausgestattete Poly- und Oligoacrylate, Polyolefine sowie Mischungen aus zwei oder mehr der genannten Stoffe.

Als Trennschicht werden häufig vernetzbare Silikonsysteme eingesetzt. Dazu zählen Mischungen aus Vernetzungskatalysatoren und so genannten thermisch härtbaren kondensations-, additions- oder radikalisch vernetzenden Polysiloxanen. Für kondensationsvernetzende Silikonsysteme sind als Vernetzungskatalysatoren häufig Zinnverbindungen, wie Dibutylzinndiacetat, in der Masse zugeben. Silikonbasierende Trennbeschichtungen auf additionsvernetzender Basis lassen sich durch Hydrosilylierung härten. Diese Trennsysteme umfassen üblicherweise die folgenden Bestandteile: ein alkenyliertes Polydiorganosiloxan (insbesondere lineare Polymere mit endständigen Alkenylgruppen bzw. endständigen und internen Vinylgruppen sowie verzweigte Silikone mit endständigen Vinylgruppen), ein Polyorganowasserstoffsiloxan-Vernetzungsmittel sowie einen Hydrosilylierungskatalysator. Als Katalysatoren für additionsvernetzende

2

Silikonsysteme haben sich Platin oder Platinverbindungen, wie zum Beispiel der Karstedt-Katalysator [eine Pt(0)-Komplexverbindung], sowie Rhodiumkatalysatoren durchgesetzt.

Weiterhin können auch photoaktive Katalysatoren, sogenannte Photoinitiatoren, in Kombination mit UV-härtbaren kationisch vernetzenden Siloxanen auf Epoxid- und/oder Vinyletherbasis beziehungsweise UV-härtbaren radikalisch vernetzenden Siloxanen wie etwa acrylatmodifizierte Siloxane verwendet werden. Ebenso ist die Verwendung von elektronenstrahlhärtbaren Silikonacrylaten möglich. Entsprechende Systeme können je nach Verwendungszweck auch weitere Zusätze wie Stabilisatoren, Pigmente, Antistatik-Additive oder Verlaufshilfsmittel enthalten. Auch kommen Additive zum Einsatz, die die Verankerung der Silikonschicht auf dem Trägermaterial verbessern.

Weiterhin sind verschiedene Arten von Organopolysiloxanmassen bekannt, welche durch Erhitzen oder Bestrahlen vernetzen. Genannt seien Massen, wie sie zum Beispiel in der DE 600 01 779 T2 beschrieben werden, die durch Additionsreaktion vernetzen, nämlich durch Temperaturbehandlung eines Gemisches aus einem Organopolysiloxan mit direkt an die Siliciumatome gebundenen Wasserstoffatomen und einem Organopolysiloxan mit direkt an die Siliciumatome gebundenen Vinylgruppen in Gegenwart eines Hydrosilylierungskatalysators.

Auch photopolymerisierbare Organopolysiloxanmassen können verwendet werden. Genannt seien beispielsweise Massen, die durch die Reaktion zwischen Organopolysiloxanen, die mit (Meth)acrylatgruppen substituierte, direkt an die Siliciumatome gebundene Kohlenwasserstoffreste aufweisen und in Gegenwart eines Photosensibilisators vernetzt werden (siehe EP 0 168 713 B1 oder DE 38 20 294 C1). Ebenfalls verwendbar sind Massen, bei denen die Vernetzungsreaktion zwischen Organopolysiloxanen, die mit Mercaptogruppen substituierte Kohlenwasserstoff direkt an den Siliziumatomen gebunden aufweisen, und Organopolysiloxanen mit direkt an die Siliciumatome gebundenen Vinylgruppen in Gegenwart eines Photosensibilisators hervorgerufen wird. Solche Massen werden beispielsweise in der US 4,725,630 A1 beschrieben.

Beim Einsatz der zum Beispiel in der DE 33 16 166 C1 beschriebenen Organopolysiloxanmassen, die mit Epoxygruppen substituierte, direkt an die Siliziumatome gebundene Kohlenwasserstoffreste aufweisen, wird die Vernetzungsreaktion durch Freisetzung einer katalytischen Säuremenge induziert, die durch Photozersetzung zugesetzter Oniumsalzkatalysatoren erhalten wird. Andere durch einen kationischen Mechanismus härtbare Organopolysiloxanmassen sind Materialien, welche zum Beispiel Propenyloxysiloxanendgruppen aufweisen.

Besondere Ausführungen der Silikonsysteme sind Polysiloxan-Blockcopolymere, z.B. mit Harnstoff-Block, wie sie von der Fa. Wacker unter dem Handelsnamen Geniomer angeboten werden, oder Trennsysteme aus Fluorsilikonen, die insbesondere bei Klebebändern mit Silikonklebemassen eingesetzt werden.

Weiterhin als Trennschicht eingesetzt werden können Wachse, fluorierte oder teilfluorierte Polymere oder Polyolefine, insbesondere Polyethylen-Blockcopolymere, wie sie in EP 2 025 07 B1 oder WO 2010/022154 A2 beschrieben sind, sowie Carbamate.

Eine Reihe von beidseitig mit Klebmasse beschichteten Klebebändern werden abgerollt und noch mit dem im Produkt enthaltenen Releaseliner, der die zweite Klebmasseschicht abdeckt, appliziert. Bei der manuellen Applikation wird die Klebmasse des Klebebandes durch Überstreichen des Releaseliners mit der Hand mit dem Untergrund in Kontakt gebracht. Bei diesem unter Andruck durchgeführten Anstreichen findet ein starker Kontakt zwischen Releaseliner des Produktes und der Hand statt. Die überwiegend eingesetzten Releaseliner haben bedingt durch das eingesetzte Trennmaterial eine stumpfe Oberfläche mit hohem Reibungskoeffizient. In diesem Fall ist das Anstreichen des Produktes unangenehm bis schmerzhaft - besonders wenn dies häufig und/oder mit hoher Geschwindigkeit durchgeführt wird.

Es ist bekannt, dass der Reibungskoeffizient von Silikon-Trennbeschichtungen durch verschiedene Methoden verringert werden kann, welche jedoch gewisse Nachteile aufweisen.

Nicht modifizierte Silikonsysteme, wie sie durch Vernetzung von lösungsmittelfreien, funktionalisierten Siloxanen gebildet werden, weisen zwar sehr gute Trenneigenschaften auf, besitzen jedoch einen hohen Reibungskoeffizienten. Bei der Verwendung von lösungsmittelhaltigen additions- oder kondensationshärtenden Silikonsystemen anstelle von den industriell überwiegend eingesetzten lösungsmittelfreien Silikon-Additionssystemen ist der Reibungskoeffizient niedriger. Allerdings zeichnen sich diese Trennsilikone durch einen ausgeprägten Übertrag von nicht einvernetzten Silikonkomponenten auf die Klebmasse aus, was zu einer Verminderung der Klebkraft führt. Zudem verwenden die Kondensationssysteme nahezu ausschließlich toxische Zinnkatalysatoren.

Dem Fachmann ist bekannt, dass durch Reduktion der Schichtdicke des Trennsystems die Reibung erniedrigt werden kann. Allerdings führt dies gleichzeitig zu einer oft unerwünschten Verschlechterung der Trenneigenschaften. Der Reibungskoeffizient von Trennsystemen kann auch durch Zusatz von Ölen oder Stoffen, welche die bei Vernetzung des Trennsystems gebildeten Strukturen aufweiten, erniedrigt werden. Dies führt jedoch dazu, dass der Anteil der migrationsfähigen Stoffe im Trennsystem ansteigt. Diese können durch Ablagerung auf einer im Kontakt mit dem Trennsystem stehenden Haftklebemasse deren Klebkraft erniedrigen.

Die EP 0 903 385 B1 beschreibt die Reduktion der Reibung von strahlungsvernetzenden Silikonsystemen durch Zusatz von sphärischen Silikonpartikeln, welche durch kontrollierte Hydrolyse von Methyltrimethoxysilan hergestellt werden. Der aufwändige und unflexible Herstellungsprozess verhindert den in einem Aspekt der dortigen Erfindung besonders vorteilhaften Einsatz von porösen oder hohlen Additiven.

Die US 2005/0074573 A1 beschreibt die Herstellung von Releaselinern, welche zur Verringerung des Reibungskoeffizienten eine strukturierte Oberfläche aufweisen. Diese strukturierte Oberfläche wird während der Herstellung der Releaseliner in einem aufwändigen Prozess durch eine Kühlwalze erzeugt.

In den Dokumenten EP 1 010 727 A2, US 5 520 978 A, US 5 432 006 A sowie EP 0 446 030 A2 werden Releaseliner mit geringem Reibungskoeffizienten offenbart, wobei dieser geringe Reibungskoeffizient durch den Zusatz von hochmolekularen, difunktionalisierten Siloxanen mit Epoxy-, Vinyl- oder Wasserstoffgruppen erzielt wird. Der Zusatz derartiger Verbindungen führt jedoch zu einem Silikonübertrag aus der Schicht des Releaseliners auf die Haftklebemasse des Klebebands, wodurch eine unerwünschte Verringerung der Klebkraft der Haftklebemasse (Klebekraftdepression, KKD) auftritt.

Gemäß der US 2012/322937 A1 kann der Reibungskoeffizient von Silikonhaltigen Releaselinern durch den Zusatz von pulverförmigen Polymerpartikeln verringert werden. Durch den Zusatz dieser Partikel weist der Releaseliner eine Oberflächenstruktur auf, welche sich als Mikrostruktur auf die Haftklebemasse übertragen kann. Eine derartige Oberflächenstruktur kann jedoch im Verarbeitungsprozess und bei der Anwendung des Klebebands zu Schwierigkeiten führen.

**Aufgabe der Erfindung**

Die Aufgabe der vorliegenden Erfindung bestand demnach in der Bereitstellung einer Trennschichtzusammensetzung sowie daraus hergestellten Trennschichten, wobei die Trennschichten einen niedrigen Reibungskoeffizienten mit stabilen Trennwerten kombinieren. Weiterhin sollen diese Trennschichten keine oder nur eine geringe Reduktion der Klebkraft durch Übertrag einiger Komponenten der Trennbeschichtung auf die Klebmasse nach Kontakt zeigen. Zudem sollen diese Trennschichten eine glatte Oberflächenstruktur aufweisen, toxikologisch unbedenklich und prozesstechnisch gut handhabbar sein. Allgemein soll die vorliegende Erfindung die Nachteile des Standes der Technik überwinden.

**Lösung der Aufgabe**

Die Aufgabe wird gelöst durch eine Zusammensetzung zur Herstellung einer Trennbeschichtung, insbesondere zur Ausrüstung eines Releaseliners, enthaltend:

a) mindestens ein Organopolysiloxan mit einem gewichtsmittleren Molekulargewicht $M_w$ von 500 bis 100.000 g/mol, welches mindestens eine Diorganosiloxaneinheit und mindestens zwei Silizium-gebundene Alkenylgruppen enthält, wobei das gewichtsmittlere Molekulargewicht $M_w$ durch Gelpermeationschromatographie in Toluol bei 23 °C und einer Flussrate von 1,0 ml/min mittels eines modifizierten Styrol-Divinylbenzol-Copolymer-Netzwerkes als Säulenmaterial und Polydimethylsiloxan als Standard (14-Punkt-Kalibrierung im $M_{peak}$-Bereich von 400 bis 2.300.000 g/mol) bestimmt wird,
b) mindestens eine zur Vernetzung von Alkenylgruppen enthaltenden Organopolysiloxanen geeignete Verbindung, welche mindestens zwei Silizium-gebundene Wasserstoffatome enthält,
c) mindestens ein Alkylsilan der Formel $H-SiR_3$, worin R für eine lineare oder verzweigte $C_1$-$C_{10}$-Kohlenwasserstoffgruppe steht, und
d) mindestens einen Katalysator.

Weiterhin wird die Aufgabe gelöst durch einen Releaseliner, enthaltend eine erfindungsgemäße vernetzte Zusammensetzung als Trennschicht.

Darüber hinaus wird die Aufgabe gelöst durch ein Klebeband, enthaltend mindestens eine Haftklebemasse sowie mindestens einen erfindungsgemäßen Releaseliner, wobei die Haftklebemasse ein- oder beidseitig mit dem Releaseliner eingedeckt ist.

Schließlich wird die Aufgabe gelöst durch die Verwendung eines Alkylsilans der Formel $H-SiR_3$, worin R für eine lineare oder verzweigte $C_1$-$C_{10}$-Kohlenwasserstoffgruppe steht, in Silikon-haltigen Releaselinern zur Verringerung des Reibungskoeffizienten der Trennschicht.

Aus dem Stand der Technik ist bekannt, dass Releaseliner aus lösungsmittelfreien Silikonbeschichtungen nur eine geringe Migration von Bestandteilen der Silikonbeschichtung auf die Haftklebemasse des Klebebands und somit nur eine geringe Verringerung der Klebkraft (Klebekraftdepression, KKD) aufweisen. Jedoch besitzt die Oberfläche dieser Releaseliner einen hohen Reibungskoeffizienten, so dass das Anstreichen des Klebebands auf dem Untergrund unangenehm bis schmerzhaft ist - besonders wenn dies häufig und/oder mit hoher Geschwindigkeit durchgeführt wird. Durch den Zusatz von langkettigen, schwach funktionalisierten Silikonverbindungen oder durch den Zusatz von Partikeln kann der Reibungskoeffizient verringert werden. Der Zusatz dieser langkettigen Silikonverbindungen führt aufgrund der enthaltenen Mengen an cyclischen Polydimethylsiloxanen sowie der Reaktionsträgheit dieser Silikonverbindungen zu einer unerwünschten Verringerung der Klebkraft, der Einsatz von Partikeln zu einer Oberflächenstruktur des Releaseliners, welche sich auf die Haftklebemasse des Klebebands überträgt.

Der Erfindung liegt die Erkenntnis zugrunde, dass durch den Zusatz von speziellen Alkylsilanen die frei beweglichen Silikonsegmente in der Trennschicht, welche den geringen Reibungskoeffizienten bewirken, durch nahezu vollständige Umsetzung des Alkylsilans mit dem Alkenylgruppen-haltigen Organosiloxan in-situ erzeugt werden. Aufgrund des geringen Siedepunkts des eingesetzten Alkylsilans verdampft nicht umgesetztes Alkylsilan während der Vernetzung zur Herstellung der Trennschicht, so dass in der Trennschicht kein überschüssiges Alkylsilan mehr enthalten ist. Die hierdurch erzeugten Trennschichten weisen eine glatte Oberflächenstruktur auf, ein Strukturübertrag auf die Haftklebemasse des mit der Trennschicht versehenen Klebebands wird daher vermieden. Weiterhin wird durch den Einsatz des hochreaktiven sowie niedrig siedenden Alkylsilans eine vollständige Abreaktion und Verdampfung während der Vernetzung gewährleistet, so dass die Bildung migrierfähiger Silikonkomponenten aus nicht abreagiertem Alkylsilan und damit verbunden eine Erhöhung des Silikontransfers aus der Silikon-haltigen Releaselinerschicht auf die Haftklebemasse des Klebebands, welcher eine unerwünschte Klebkraftdepression erzeugt, nicht oder nur in geringem Maße stattfindet. Zudem führt der Einsatz der Alkylsilane zu einer Verringerung des Trennwerts.

**Detaillierte Beschreibung der Erfindung**

Als erste zwingende Komponente enthält die erfindungsgemäße Zusammensetzung mindestens ein spezielles Organopolysiloxan a). Als Organopolysiloxane a) können lineare, cyclische oder verzweigte Polydialkylsiloxane eingesetzt werden. Besonders bevorzugt werden verzweigte Polydimethylsiloxane, welche endständig mit organischen, olefinischen Gruppen substituiert sind, als Komponente a) eingesetzt.

Gemäß einer bevorzugten Ausführungsform des ersten Erfindungsgegenstands weist das Organopolysiloxan a) ein gewichtsmittleres Molekulargewicht $M_w$ von 1.000 bis 60.000 g/mol, auf. Die Angaben des mittleren Molekulargewichts $M_w$ in dieser Schrift beziehen sich auf die Bestimmung per Gelpermeationschromatographie in Toluol bei 23 °C und einer Flussrate von 1,0 ml/min mittels eines modifizierten Styrol-Divinylbenzol-Copolymer-Netzwerkes als Säulenmaterial und Polydimethylsiloxan als Standard (14-Punkt-Kalibrierung im $M_{peak}$-Bereich von 400 bis 2.300.000 g/mol), wie im Beispielteil beschrieben

Als weitere zwingende Komponente enthält die erfindungsgemäße Zusammensetzung mindestens ein Alkylsilan der Formel $H-SiR_3$. Im Rahmen der vorliegenden Erfindung hat es sich als vorteilhaft erwiesen, wenn der Rest R für eine lineare $C_1-C_{10}$-Kohlenwasserstoffgruppe, insbesondere für eine lineare $C_2-C_8$-Kohlenwasserstoffgruppe, steht. Der Einsatz derartiger Alkylsilane führt zu einer Verringerung des Reibungskoeffizienten, ohne die Neigung zum Silikonübertrag nachteilig zu erhöhen. Weiterhin wird bei Einsatz des Alkylsilans eine Verringerung des Trennwerts erreicht.

Die Oberflächenreibung der Zusammensetzung lässt sich an die jeweiligen Anforderungen anpassen, indem der Anteil des Alkylsilans der Formel $H-SiR_3$ (Komponente c)) variiert wird. Durch Erhöhung des Anteils an Alkylsilan der Formel $H-SiR_3$, insbesondere mit R = $C_2-C_8$-Kohlenwasserstoffgruppe, kann die Oberflächenreibung verringert werden, ohne jedoch den Trennwert oder die geringe Klebkraft-Depression der ausgehärteten Trennformulierung negativ zu beeinflussen. Auf diese Weise ist eine einfache Anpassung der Zusammensetzung an die für die jeweilige Anwendung erforderliche Oberflächenreibung möglich. Bevorzugt enthält daher die Zusammensetzung die Komponente c) in einem Silananteil von 20 bis 80 mol-%, vorzugsweise von 30 bis 70 mol.-%, bevorzugt von 40 bis 70 mol.-%, insbesondere von 50 bis 70 mol.-%, jeweils bezogen auf den molaren Gesamtgehalt an Si-H-Gruppen der Komponenten b) und c).

Weiterhin ist es erfindungsgemäß bevorzugt, wenn die Zusammensetzung das spezielle Alkylsilan in einer bestimmten Gesamtmenge enthält. Vorzugsweise enthält die Zusammensetzung daher die Komponente c) in einer Gesamtmenge von 1 bis 15 Gewichtsteilen, vorzugsweise von 2 bis 12 Gewichtsteilen, bevorzugt von 3 bis 10 Gewichtsteilen, insbesondere von 4 bis 9 Gewichtsteilen, jeweils bezogen auf die Summe der Komponenten a), b) und c) von 100 Gewichtsteilen. Der Einsatz des speziellen Alkylsilans in den zuvor angeführten Gesamtmengen führt zu einer Verringerung der Oberflächenreibung und des Trennwerts, ohne jedoch die geringe Neigung zum Silikon-Übertrag negativ zu beeinflussen.

Darüber hinaus ist es erfindungsgemäß bevorzugt, wenn die Komponenten a) und b) ebenfalls in bestimmten Gesamtmengen eingesetzt werden. Vorzugsweise enthält die Zusammensetzung daher die Komponente a) in einer Gesamtmenge von 87 bis 92 Gewichtsteilen und die Komponente b) in einer Gesamtmenge von 2 bis 8 Gewichtsteilen, jeweils bezogen auf die Summe der Komponenten a), b) und c) von 100 Gewichtsteilen.

Die Vernetzung der zuvor angeführten Komponenten a), b) und c) erfolgt durch Hydrosilylierungsreaktion zwischen den alkenylfunktionalisierten Organopolysiloxanen (Komponente a), den korrespondierenden SiH-funktionalisierten Organopolysiloxanen (Komponente b) und dem Alkylsilan (Komponente c). Diese Hydrosilylierungsreaktion wird erfindungsgemäß durch den Einsatz von Katalysatoren beschleunigt. Als Katalysatoren werden insbesondere Platin- oder Rhodiumkatalysatoren eingesetzt. Es hat sich als erfindungsgemäß vorteilhaft erwiesen, wenn der Platin- oder Rhodiumkatalysator bevorzugt in einer Gesamtmenge von 40 bis 600 ppm, berechnet als Platin- oder Rhodiummetall und bezogen auf die Summe der Komponenten a), b) und c) von 100 Gewichtsteilen, eingesetzt wird. Die Vernetzungsreaktion wird bevorzugt bei erhöhten Temperaturen von 90 - 200 °C durchgeführt.

Die erfindungsgemäße Zusammensetzung kann lösungsmittelhaltig oder lösungsmittelfrei sein. Bevorzugt ist die Zusammensetzung lösungsmittelfrei. Lösungsmittelfreie Zusammensetzungen enthalten 0 bis 1 Gew.-%, insbesondere 0 Gew.-%, bezogen auf das Gesamtgewicht der Zusammensetzung, an Lösungsmitteln. Unter Lösungsmittel ist hierbei eine Verbindung zu verstehen, welche Flüssigkeiten oder Feststoffe lösen oder verdünnen kann, ohne dass es während des gesamten Verarbeitungsprozesses zu chemischen Reaktionen zwischen gelöstem Stoff und lösendem Stoff kommt.

Neben den zuvor angeführten zwingenden Komponenten a) bis d) kann die erfindungsgemäße Zusammensetzung auch weitere Additive enthalten. Diese Additive werden insbesondere dermaßen gewählt, dass die erzielten Trennwerte, die Oberflächenreibung und die Klebkraft-Depression der Beschichtung nicht negativ beeinflusst werden. Als weitere Additive können beispielsweise eingesetzt werden:

- Prozessstabilisatoren, wie Vinylsilane, Maleate oder Alkinole als Inhibitoren für den Platin- oder Rhodiumkatalysator,
- Prozessbeschleuniger, wie Aminoorganyle,
- Füllstoffe, wie Siliziumdioxid, Glas (gemahlen oder in Form von Kugeln), Aluminiumoxide und Zinkoxide,
- gegebenenfalls weitere (Silikon-)Polymere, beispielsweise auf Basis reiner Kohlenwasserstoffe, wie chemisch im wesentlichen gesättigter Elastomere (gesättigte Ethylen-Propylen-Copolymere, $\alpha$-Olefincopolymeren, Polyisobutylen, Butylkautschuk) sowie chemisch funktionalisierter Kohlenwasserstoffe (halogenhaltige, acrylathaltige oder vinyletherhaltige Polyolefine),
- Plastifizierungsmittel, wie Flüssigharze, Weichmacheröle oder niedermolekulare flüssige Polymere (niedermolekulare Silikonöle mit gewichtsmittleren Molekulargewichten $M_w$ von kleiner 1.500 g/mol).

Ein weiterer Gegenstand der Erfindung ist ein Releaseliner, enthaltend eine vernetzte erfindungsgemäße Zusammensetzung als Trennschicht. Diese Trennschicht ist bevorzugt auf einem Trägermaterial (TS) aufgebracht, wobei alle dem Fachmann geläufigen Beschichtungsverfahren verwendet werden können. Nach Auftrag der Zusammensetzung auf dem Trägermaterial erfolgt die Vernetzung der Zusammensetzung bei erhöhten Temperaturen.

Das Trägermaterial (TS) kann ein oder beidseitig mit der erfindungsgemäßen Zusammensetzung als Trennschicht beschichtet werden. Beidseitig beschichtete Liner eignen sich insbesondere bei einer benachbarten Windung auf einen Ballen oder einer Rolle.

Als Trägermaterial (TS) kann grundsätzlich jede Schicht eingesetzt werden, welche dem Fachmann zum Einsatz in Schichtverbünden, insbesondere Klebebändern, bekannt ist. Insbesondere werden jedoch Papiere oder Folien als Trägermaterial (TS) eingesetzt. Als Folien werden dabei bevorzugt solche aus Polyethersulfonen, Polysulfonen, Polyolefinen und Polyestern, insbesondere aus biaxial verstrecktem Polyethylenterephthalat, Polybuten, Polypropylen, Polyethylen, monoaxial verstrecktem Polypropylen sowie biaxial verstrecktem Polypropylen oder Polyethylen verwendet. Erfindungsgemäß besonders bevorzugt werden Papier, Polyolefinfolien (Polypropylen- und Polyethylenfolien) oder Polyesterfolien als Trägermaterial (TS) eingesetzt. Auch polymerbeschichtete Papiere oder Vliese können eingesetzt werden.

Im Rahmen dieses Erfindungsgegenstands hat es sich als vorteilhaft erwiesen, wenn die Trennschicht eine Schichtdicke von 0,1 bis 5,0 $\mu$m, vorzugsweise von 0,2 bis 2,5 $\mu$m, insbesondere von 0,4 bis 2,0 $\mu$m, aufweist.

Um die Wiederablösbarkeit des Releaseliners von der Haftklebemasse eines Klebebands zu ermöglichen, muss Trennschicht eine geringe Oberflächenenergie aufweisen. Daher müssen die Trenneigenschaften bzw. die Kohäsion auf die adhäsiven Eigenschaften der Haftklebemasse des Klebebands abgestimmt werden. Als zentrale Größe, die das Ablöseverhalten beschreibt, dient die Abzugskraft. Um einerseits eine ausreichende Haftung der Trennschicht des Releaseliners während der Handhabung des Klebebands zu erreichen, sind Abzugskräfte von mindestens 3 cN/cm erforderlich. Bei geringeren Abzugskräften kann es zu einer ungewollten Ablösung des Liners während der Herstellung, Lagerung sowie Handhabung kommen. Um andererseits jedoch eine einfache Ablösung des Releaseliners von der Haftklebemasse sicherzustellen, darf die Trennkraft auch nicht zu hoch sein. Gemäß einer bevorzugten Ausführungsform des zweiten Erfindungsgegenstands weist die Trennschicht eine Abzugskraft von 3 bis 80 cN/cm, vorzugsweise von 4 bis 60 cN/cm, insbesondere von 5 bis 40 cN/cm, auf, wobei die Abzugskraft auf einer PE-Trägerplatte durch eine Zugprüfung (Maschinengeschwindigkeit 300 mm/min, Abzugswinkel 180°, tesa 7475 oder tesa 7476) bestimmt wird. Die Ermittlung der Abzugskraft erfolgt dabei analog zur Ermittlung der im Beispielteil beschriebenen Trennkraft. Jedoch wird im Fall der Abzugskraft ein Abzugswinkel von 180 ° verwendet. Die zuvor angeführten Abzugskräfte ermöglichen zum einen eine ausreichende Haftung des Releaseliners auf der Haftklebemasse eines Klebebands während dessen Herstellung, Handhabung und Lagerung, erlauben jedoch andererseits auch eine einfache Entfernung des Liners nach Aufbringung der Haftklebemasse des Klebebands auf den gewünschten Untergrund.

Um eine Strukturierung der Oberfläche der Haftklebemasse eines Klebebands, welche mit der Oberfläche des Liners in Verbindung steht, zu verhindern, darf die Trennschicht keine Oberflächenstruktur aufweisen. Der im Stand der Technik bekannte Einsatz von Partikeln zur Verringerung der Oberflächenreibung führt jedoch zu einer Oberflächenstruktur des Liners. Hingegen wird durch den Zusatz des Alkylsilans in Zusammensetzungen zur Herstellung von Releaselinern ebenfalls eine verringerte Oberflächenreibung erreicht, ohne dass jedoch eine Oberflächenstrukturierung auftritt. Erfindungsgemäß bevorzugte Releaseliner sind daher dadurch gekennzeichnet, dass die Trennschicht keine Oberflächenstruktur aufweist.

Bezüglich weiterer bevorzugter Ausführungsformen des erfindungsgemäßen Releaseliners, insbesondere bezüglich der in dem Liner verwendeten vernetzten Zusammensetzung, gilt mutatis mutandis das in Bezug auf die erfindungsgemäßen Zusammensetzung Gesagte.

Ein weiterer Gegenstand der vorliegenden Erfindung ist ein Klebeband, enthaltend mindestens eine Haftklebemasse sowie mindestens einen erfindungsgemäßen Releaseliner, wobei die Haftklebemasse ein- oder beidseitig mit dem Releaseliner eingedeckt ist. Der allgemeine Ausdruck "Klebeband" umfasst im Sinne dieser Erfindung alle flächigen Gebilde wie in zwei Dimensionen ausgedehnte Geometrien, Bänder mit ausgedehnter Länge und begrenzter Breite, Bandabschnitte, Etiketten, Stanzlinge und dergleichen.

Das erfindungsgemäße Klebeband kann trägerlos oder auch mit wenigstens einem Trägermaterial ausgestaltet sein. Ist ein Trägermaterial vorhanden, kann dieses ein- oder vorzugsweise beidseitig mit der Haftklebemasse versehen sein. Dabei sind für verschiedene Anwendungen unterschiedlichste Träger wie zum Beispiel Folien, Gewebe, Vliese und Papiere mit den Klebemassen kombinierbar.

Als Trägermaterial können alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer (opto-)elektronischen Anordnung), Mehrschichtanordnungen und dergleichen verwendet werden. Dabei sind für verschiedene Anwendungen unterschiedlichste Träger wie zum Beispiel Folien, Gewebe, Vliese und Papiere mit verschiedenen Klebstoffen kombinierbar.

Als Trägermaterial des Klebebands werden vorliegend bevorzugt Polymerfolien, Folienverbunde oder mit organischen und/oder anorganischen Schichten versehene Folien oder Folienverbunde sowie Papiere eingesetzt. Folien/Folienverbunde können aus allen gängigen zur Folienherstellung verwendeten Kunststoffen bestehen, beispielhaft erwähnt seien: Polyethylen, Polypropylen - insbesondere das durch mono-oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

Der Träger kann zudem mit organischen oder anorganischen Beschichtungen oder Schichten kombiniert sein. Dies kann durch übliche Verfahren wie zum Beispiel Lackieren, Drucken, Bedampfen, Sputtern, Co-Extrusion oder Lamination geschehen. Beispielhaft, aber nicht einschränkend erwähnt seien hier etwa Oxide oder Nitride des Siliziums und des Aluminiums, Indium-Zinn-Oxid (ITO) oder Sol-Gel-Beschichtungen.

Als Klebemasse ist in dem Klebeband eine Haftklebemasse vorhanden, so dass sich ein einseitig klebendes Klebeband ergibt, in dem die Beschichtung als Trennmittel wirkt. Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen beruht auf ihren adhäsiven Eigenschaften und die Wiederablösbarkeit auf ihren kohäsiven Eigenschaften. Als Basis für Haftklebemassen kommen verschiedene Verbindungen in Frage.

Als Beispiele für Haftklebemassen seien als vorteilhaft im Sinne dieser Erfindung die folgenden genannt: Acrylat-, Silikon-, Naturkautschuk-, Synthesekautschuk-, Styrolblockcopolymermassen, mit einem Elastomerblock aus ungesättigten oder hydrierten Polydienblöcken (Polybutadien, Polyisopren, Copolymeren aus beiden sowie weitere, dem Fachmann geläufige Elastomerblöcke) sowie weitere, dem Fachmann geläufige Haftklebemassen, für die insbesondere silikonhaltige Trennbeschichtungen verwendet werden können. Wird im Rahmen dieser Schrift von Haftklebemassen auf Acrylatbasis gesprochen, so seien hiervon auch ohne explizite Erwähnung Haftklebemassen auf Basis von Methacrylaten und auf Basis von Acrylaten und Methacrylaten umfasst, sofern nicht ausdrücklich anders beschrieben. Ebenfalls im Sinne der Erfindung sind Kombinationen und Blends mehrerer Basispolymere sowie mit Klebharzen, Füllstoffen, Alterungsschutzmitteln und Vernetzern additivierte Klebemassen.

Der Träger des Klebebands wird einseitig mit dem bevorzugten Haftkleber aus Lösung oder Dispersion oder 100 %ig (zum Beispiel Schmelze) oder durch Coextrusion beschichtet. Alternativ ist eine Beschichtung durch Transfer einer Klebemassen-Schicht durch Kaschieren möglich. Die Klebeschicht(en) können durch Wärme oder energiereiche Strahlen vernetzt werden.

Zur Optimierung der Eigenschaften kann bevorzugt die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein.

Die Menge der Klebstoffschicht beträgt bevorzugt 10 bis 120 g/m$^2$, vorzugsweise 25 bis 100 g/m$^2$ (gemeint ist

die Menge nach einer eventuell notwendigen Entfernung von Wasser oder Lösungsmittel; die Zahlenwerte entsprechen auch in etwa der Dicke in $\mu$m).

Vorteilhaft ist eine physikalische Vorbehandlung der mit Haftklebemasse zu beschichtenden Trägerseite zur Verbesserung der Haftung, beispielsweise durch Flamm-, Plasma- oder Coronabehandlung.

Bei Bedarf kann vor dem Aufbringen der Haftkleberschicht auf dem Träger eine Primerschicht, insbesondere lösungsmittelfrei wie zum Beispiel durch Coextrusion, aufgebracht werden, so dass sich zwischen der Trägerschicht und einer Haftkleberschicht eine Primerschicht befindet. Als Primer sind die bekannten Dispersion- und Lösungsmittelsysteme verwendbar, zum Beispiel auf Basis von isopren- oder butadienhaltigen Kautschuken und/oder Cyclokautschuken. Isocyanate oder Epoxharze als Additive verbessern die Haftung und erhöhen zum Teil auch die Scherfestigkeit des Haftklebstoffes. Physikalische Oberflächenbehandlungen wie Beflammung, Corona oder Plasma oder Coextrusionsschichten sind ebenfalls geeignet, die Haftung zu verbessern. Besonders bevorzugt ist die Nutzung vorgenannter Verfahren bei Verwendung lösungsmittelfreier Klebstoffschichten, insbesondere solche auf Acrylatbasis. Beschreibungen der üblichen Primer finden sich zum Beispiel in "Handbook of Pressure Sensitive Adhesive Technology", D. Satas, (3. Auflage).

Für einige Anwendungen des erfindungsgemäßen Klebebands kann es erforderlich sein, den Silikonübertrag aus der Trennschicht des Releaseliners auf die Haftklebemasse des Klebebands zu begrenzen, da der Übertrag von Silikon zu einer Verringerung der Klebkraft dieser Haftklebemasse führt (Klebkraft-Depression). Es ist daher erfindungsgemäß besonders bevorzugt, wenn die Haftklebemasse eine Klebkraft-Depression (KKD) von 0 bis 30 %, vorzugsweise von 0 bis 20%, insbesondere von 0 bis 15 % aufweist, wobei die Klebkraft-Depression (KKD) auf einer Stahloberfläche gegenüber einer Referenzprobe durch eine Zugprüfung (Maschinengeschwindigkeit 300 mm/min, Abzugswinkel 180°) anhand folgender Formel

$$KKD = \frac{Klebkraft_{Referenz} - Klebkraft_{Probe}}{Klebkraft_{Referenz}} \cdot 100\,\%$$

bestimmt wird. Bei der Referenzprobe handelt es sich um eine Haftklebemasse, welche vor Bestimmung der Klebkraft mittels Zugprüfung nicht mit der Trennbeschichtung des Releaseliners in Kontakt stand.

Bezüglich weiterer bevorzugter Ausführungsformen des erfindungsgemäßen Klebebands, insbesondere bezüglich der in dem Klebeband verwendeten Releaseliner, gilt mutatis mutandis das in Bezug auf die erfindungsgemäßen Zusammensetzung sowie auf den erfindungsgemäßen Releaseliner Gesagte.

Schließlich ist ein weiterer Gegenstand der vorliegenden Erfindung die Verwendung eines Alkylsilans der Formel H-SiR$_3$, worin R für eine lineare oder verzweigte C$_1$-C$_{10}$-Kohlenwasserstoffgruppe steht, in Silikon-haltigen Releaselinern zur Begrenzung des Silikontransfers aus der Trennschicht des Releaseliners auf die Haftklebemasse eines Klebebandes und/oder zur Verringerung der Abzugskraft der Trennschicht und/oder zur Verringerung des Reibungskoeffizienten der Trennschicht.

Bezüglich weiterer bevorzugter Ausführungsformen der erfindungsgemäßen Verwendung, insbesondere bezüglich der verwendeten Alkylsilane, gilt mutatis mutandis das in Bezug auf die erfindungsgemäßen Zusammensetzung, den erfindungsgemäßen Releaseliner sowie das erfindungsgemäße Klebeband Gesagte.

Die Erfindung betrifft insbesondere die folgenden Ausführungsformen:

Nach einer ersten Ausführungsform betrifft die vorliegende Erfindung eine Zusammensetzung zur Herstellung einer Trennbeschichtung, insbesondere zur Ausrüstung eines Releaseliners, enthaltend:

a) mindestens ein Organopolysiloxan mit einem gewichtsmittleren Molekulargewicht M$_w$ von 500 bis 100.000 g/mol, welches mindestens eine Diorganosiloxaneinheit und mindestens zwei Silizium-gebundene Alkenylgruppen enthält, wobei das gewichtsmittlere Molekulargewicht M$_w$ durch Gelpermeationschromatographie in Toluol bei 23 °C und einer Flussrate von 1,0 ml/min mittels eines modifizierten Styrol-Divinylbenzol-Copolymer-Netzwerkes als Säulenmaterial und Polydimethylsiloxan als internem Standard bestimmt wird,

b) mindestens eine zur Vernetzung von Alkenylgruppen enthaltender Organopolysiloxane geeignete Verbindung, welche mindestens zwei Silizium-gebundene Wasserstoffatome enthält,

c) mindestens ein Alkylsilan der Formel H-SiR$_3$, worin R für eine lineare oder verzweigte C$_1$-C$_{10}$-Kohlenwasserstoffgruppe steht, und

d) mindestens einen Katalysator.

Nach einer zweiten Ausführungsform betrifft die vorliegende Erfindung eine Zusammensetzung nach Ausführungsform 1, dadurch gekennzeichnet, dass das Organopolysiloxan a) ein gewichtsmittleres Molekulargewicht M$_w$ von 1.000 bis 60.000 g/mol, aufweist, wobei das gewichtsmittlere Molekulargewicht M$_w$ durch Gelpermeationschromatographie in Toluol bei 23 °C und einer Flussrate von 1,0 ml/min mittels eines modifizierten Styrol-Divinylbenzol-Copolymer-Netzwerkes als Säulenmaterial und Polydimethylsiloxan als internem Standard bestimmt wird

Nach einer dritten Ausführungsform betrifft die vorliegende Erfindung eine Zusammensetzung nach einer der Ausführungsformen 1 oder 2, dadurch gekennzeichnet, dass der Rest R für eine lineare $C_1$-$C_{10}$-Kohlenwasserstoffgruppe, insbesondere für eine lineare $C_2$-$C_8$-Kohlenwasserstoffgruppe, steht.

Nach einer vierten Ausführungsform betrifft die vorliegende Erfindung eine Zusammensetzung nach einer der vorangehenden Ausführungsformen, dadurch gekennzeichnet, dass die Zusammensetzung die Komponente c) in einem Silananteil von 20 bis 80 mol-%, vorzugsweise von 30 bis 70 mol.-%, bevorzugt von 40 bis 70 mol.-%, insbesondere von 50 bis 70 mol.-%, jeweils bezogen auf den molaren Gesamtgehalt an Si-H-Gruppen der Komponenten b) und c), enthält.

Nach einer fünften Ausführungsform betrifft die vorliegende Erfindung eine Zusammensetzung nach einer der vorangehenden Ausführungsformen, dadurch gekennzeichnet, dass die Zusammensetzung die Komponente c) in einer Gesamtmenge von 1 bis 15 Gewichtsteilen, vorzugsweise von 2 bis 12 Gewichtsteilen, bevorzugt von 3 bis 10 Gewichtsteilen, insbesondere von 4 bis 9 Gewichtsteilen, jeweils bezogen auf die Summe der Komponenten a), b) und c) von 100 Gewichtsteilen, enthält.

Nach einer sechsten Ausführungsform betrifft die vorliegende Erfindung eine Zusammensetzung nach einer der vorangehenden Ausführungsformen, dadurch gekennzeichnet, dass die Zusammensetzung die Komponente a) in einer Gesamtmenge von 87 bis 92 Gewichtsteilen und die Komponente b) in einer Gesamtmenge von 2 bis 8 Gewichtsteilen, jeweils bezogen auf die Summe der Komponenten a), b) und c) von 100 Gewichtsteilen, enthält.

Nach einer siebten Ausführungsform betrifft die vorliegende Erfindung eine Zusammensetzung nach einer der vorangehenden Ausführungsformen, dadurch gekennzeichnet, dass der Katalysator ausgewählt ist aus Platin- oder Rhodiumkatalysatoren und bevorzugt in einer Gesamtmenge von 40 bis 600 ppm, berechnet als Platin- oder Rhodiummetall und bezogen auf die Summe der Komponenten a), b) und c) von 100 Gewichtsteilen, eingesetzt wird.

Nach einer achten Ausführungsform betrifft die vorliegende Erfindung eine Zusammensetzung nach einer der vorangehenden Ausführungsformen, dadurch gekennzeichnet, dass die Zusammensetzung lösungsmittelfrei ist.

Nach einer neunten Ausführungsform betrifft die vorliegende Erfindung einen Releaseliner, enthaltend eine vernetzte Zusammensetzung nach mindestens einer der vorangehenden Ausführungsformen als Trennschicht.

Nach einer zehnten Ausführungsform betrifft die vorliegende Erfindung einen Releaseliner nach Ausführungsform 9, dadurch gekennzeichnet, dass die Trennschicht eine Schichtdicke von 0,1 bis 5,0 $\mu$m, vorzugsweise von 0,2 bis 2,5 $\mu$m, insbesondere von 0,4 bis 2,0 $\mu$m, aufweist.

Nach einer elften Ausführungsform betrifft die vorliegende Erfindung einen Releaseliner nach einer der Ausführungsformen 9 oder 10, dadurch gekennzeichnet, dass die Trennschicht keine Oberflächenstruktur aufweist.

Nach einer zwölften Ausführungsform betrifft die vorliegende Erfindung ein Klebeband, enthaltend mindestens eine Haftklebemasse sowie mindestens einen Releaseliner nach einer der Ausführungsformen 9 bis 11, wobei die Haftklebemasse ein- oder beidseitig mit dem Releaseliner eingedeckt ist.

Nach einer dreizehnten Ausführungsform betrifft die vorliegende Erfindung ein Klebeband nach Ausführungsform 12, dadurch gekennzeichnet, dass Haftklebemasse eine Klebkraft-Depression (KKD) von 0 bis 30 %, vorzugsweise von 0 bis 20%, insbesondere von 0 bis 15 % aufweist, wobei die Klebkraft-Depression (KKD) auf einer Stahloberfläche gegenüber einer Referenzprobe durch eine Zugprüfung (Maschinengeschwindigkeit 300 mm/min, Abzugswinkel 180°) anhand folgender Formel

$$KKD = \frac{Klebkraft_{Referenz} - Klebkraft_{Probe}}{Klebkraft_{Referenz}} \cdot 100\,\%$$

bestimmt wird.

Nach einer vierzehnten Ausführungsform betrifft die vorliegende Erfindung die Verwendung eines Alkylsilans der Formel H-SiR$_3$, worin R für eine lineare oder verzweigte $C_1$-$C_{10}$-Kohlenwasserstoffgruppe steht, in Silikon-haltigen Releaselinern zur Verringerung des Reibungskoeffizienten der Trennschicht.

Die vorliegende Erfindung wird im Folgenden anhand von Ausführungsbeispielen näher erläutert. Solange es nicht anders angegeben wird, sind alle Anteile von Komponenten jeweils auf ihr Gewicht bezogen angegeben

**Beispiele:**

**Herstellung der Releaseliner:**

Es wurden Releaseliner auf einem Glassine-Papier (Silca ind. 2S white SCO 90 g der Firma Ahlström) hergestellt, indem die nachfolgend angegebenen Trennbeschichtungszusammensetzungen über eine Labor-Beschichtungsanlage aufgebracht wurden. Das Beschichtungsgewicht lag bei 1,0 g/m². Nach der Beschichtung wurden die Trennsysteme im Umluftofen 30 s lang bei 160 °C vernetzt.

Die auf diese Art hergestellten Releaseliner wurden im Hinblick auf ihre Oberflächenreibung, die Klebkraft-Depression, die Veränderung der Abzugskräfte (tesa® 7475 und tesa® 7476) sowie die Linerstrukturierung und den Strukturübertrag auf die Haftklebemasse des Klebebands untersucht. Bei dem Testband tesa®7475 handelt es sich um einen 36 μm dicken PET-Träger, der mit 95 g/m² einer Harz modifizierten Acrylat-Haftklebmasse beschichtet ist. Das Testband tesa® 7476 verwendet einen Masseauftrag von 130 g/m² einer Naturkautschuk-Haftklebmasse auf einem 160 g/m² dicken Träger.

**Messung der Trennkraft:**

Die hergestellten Releaseliner wurden mit zwei unterschiedlichen Klebebändern beklebt. Dazu wurden jeweils 20 mm breite und 300 mm lange Streifen von den Testbändern tesa® 7475 und tesa® 7476 auf den jeweiligen Releaseliner geklebt. Pro Probe wurden jeweils 3 Laminate aus Liner mit Testband tesa® 7475 und Liner mit Testband tesa® 7476 unter Druck und Temperatur 24 h lang gelagert. Die Temperatur bei der Lagerung betrug 40 °C für das Testband tesa® 7476 und 70 °C für das Testband tesa® 7475. Der Druck betrug in beiden Fällen 4 N/cm². Nach der anschließenden Lagerung der Proben für 2 Stunden in einem klimatisierten Messraum bei 23 °C und 50 % relative Luftfeuchtigkeit wurde die jeweilige Probe in eine Zugprüfmaschine (BZ2.5/TN1S, Fa. Zwick) eingespannt. Das verlängerte Ende des Eindeckmaterials wurde in die obere Backe geklemmt und mit einer Maschinengeschwindigkeit von 300 mm/min im Winkel 90° abgezogen.

**Messung der Klebkraftdepression**

Weiterhin wurde ein möglicher Übertrag von Silikon oder den verschiedenen Additiven durch Messung der Klebkraftdepression des Testbandes tesa® 7475 evaluiert. Dazu wurde die Klebkraft eines neuen Testbandes tesa® 7475 auf einer Stahloberfläche durch eine Zugprüfung (Abzugswinkel 180°) gemessen (entspricht dem Wert Klebkraft$_{Referenz}$).

Anschließend wurde ein Testband tesa® 7475, welches vorher zur Messung des Trennverhaltens für 24 h bei Druck und Temperatur mit dem Liner gelagert wurde ebenfalls auf Stahl geklebt und die Klebkraft mit einer Zugprüfung gemessen (entspricht dem Wert Klebkraft$_{Probe}$). Die Klebkraftdepression (KKD) wurde dann noch folgender Gleichung berechnet:

$$KKD = \frac{Klebkraft_{Referenz} - Klebkraft_{Probe}}{Klebkraft_{Referenz}} \cdot 100\,\%$$

**Bestimmung des Reibungskoeffizienten:**

Zur Bestimmung des Reibungskoeffizienten beziehungsweise der dahinterstehenden Frage, ob das Trennsystem ein angenehmes Hautgefühl beim Anstreichen zeigt, wurden die mit Trennsystem beschichteten Proben im direkten Vergleich von fünf Testpersonen bewertet. Die Bewertungsgrundlage ist das Hautgefühl bei Anstreichen des mit Trennsystem beschichteten Liners mit der Hand unter stärkerem Druck - also den üblichen, dem Fachmann bekannten Methoden zur Applikation von Haftklebstoffen. Die Bewertungsskala geht von 1 bis 6, wobei eine niedrigere Punktzahl ein angenehmeres Hautgefühl bedeutet. Jede Testperson soll die Probe mit dem angenehmsten Hautgefühl mit 1 und die mit dem unangenehmsten Hautgefühl mit 6 bewerten. Alle weiteren Proben werden relativ zu diesen nach dem jeweiligen Hautgefühl bewertet. Zur Auswertung wurde der Mittelwert der Bewertungen der verschiedenen Testpersonen berechnet.

**Gelpermeationschromatographie (GPC):**

Mittels GPC können die gewichtsmittleren Molekulargewichte (M$_w$) der eingesetzten Organopolysiloxane und Silikonharze bestimmt werden. Für die Bestimmung wurden folgende Einstellungen verwendet: Eluent Toluol; Messtemperatur 23°C; Vorsäule PSS-SDV, 5 μm, 10² Å (10 nm), ID 8,0 mm x 50 mm; Auftrennung: Säulen PSS-SDV, 5 μm, 10² Å (10 nm), sowie 10³ Å (100 nm), und 10⁶ Å (105 nm), mit jeweils ID 8,0 mm x 300 mm; Probenkonzentration 3 g/l, Durchflussmenge 1,0 ml pro Minute; Polydimethylsiloxan-Standards (14-Punkt-Kalibrierung im M$_{Peak}$-Bereich von 400 bis 2.300.000 g/mol).

**Verwendete Rohstoffe:**

| SYL-OFF™ SL 100, Dow | Lösungsmittelfreies PDMS-basiertes Basispoylmer |
|---|---|
| SYL-OFF™ SL 160, Dow | Lösungsmittelfreies PDMS-basiertes Basispoylmer |
| Syl-Off™ 7672, Dow | Methylhydrogensiloxan-Vernetzer (100 Gew.-% Silikonfeststoffgehalt) |
| Syl-Off™ 4000, Dow | Reaktiver Organo-Platinkomplex (5.000 ppm Platinmetall), dispergiert in Organosiloxan |

**Beispiel 1: Silikonsysteme mit und ohne Alkylsilan**

Als Silikonsysteme wurden additionsvernetzende Silikonsysteme verwendet, welche ein PDMS-basiertes Release-Basispolymer (SL 100 oder SL 160 - Komponente a), einen Si-H-Vernetzer (Syl-Off 7672 - Komponente b) sowie einen Platin-Katalysator (Syl-Off 4000 - Komponente d) enthalten. Zu diesen Systemen wurden jeweils unterschiedliche Anteile an Triethylsilan oder Tributylsilan (Komponente c) - Additiv A oder B) gegeben (siehe Tabelle 1) und die erhaltenen Mischungen wurden homogenisiert. Alle Silikonzusammensetzungen wurden mit einer Laborstreichmaschine mit einem Silikonauftrag von 1,0 g/m$^2$ auf ein Glassine Papier (Silca ind. 2S white SCO 90 g der Firma Ahlström) beschichtet. Die beschichteten Proben wurden 30 s im Ofen bei 160 °C vernetzt. Anschließend wurden die Trennwerte mit den Testbändern, sowie die Klebkraftdepression und das Reibungsverhalten der Liner wie oben beschrieben bewertet (siehe Tabelle 2).

Tabelle 1: Eingesetzte Mengen an Komponenten der Trennbeschichtungszusammensetzung

| Beispiel | Release-Basispolymer (Komponente a) | Art Additiv [1] | Menge Komponente a) [g] | Menge Komponente b) [g] | Menge Komponente d) [g] | Menge Komponente c) [g] | Silan anteil Komonente c) [mol.-%][2] |
|---|---|---|---|---|---|---|---|
| #1* | SL 100 | - | 18,06 | 1,54 | 0,4 | 0,00 | 0 |
| #2 | SL 100 | A | 18,03 | 1,23 | 0,4 | 0,34 | 20 |
| #3 | SL 100 | A | 18,01 | 1,08 | 0,4 | 0,51 | 30 |
| #4 | SL 100 | A | 17,99 | 0,77 | 0,4 | 0,86 | 50 |
| #5 | SL 100 | A | 17,96 | 0,46 | 0,4 | 1,20 | 70 |
| #6 | SL 100 | B | 17,83 | 1,22 | 0,4 | 0,59 | 20 |
| #7 | SL 100 | B | 17,56 | 0,90 | 0,4 | 1,15 | 40 |
| #8 | SL 100 | B | 17,32 | 0,59 | 0,4 | 1,70 | 60 |
| #9* | SL 160 | - | 18,40 | 1,20 | 0,4 | 0,00 | 0 |
| #10 | SL 160 | A | 18,34 | 0,60 | 0,4 | 0,67 | 50 |
| #11 | SL 160 | B | 18,19 | 0,95 | 0,4 | 0,46 | 20 |
| #12 | SL 160 | B | 17,90 | 0,59 | 0,4 | 1,13 | 50 |

* nicht erfindungsgemäß
[1] A: Triethylsilan; B: Tributylsilan
[2] bezogen auf den molaren Gesamtgehalt an Si-H-Gruppen der Komponenten b) und c)

Tabelle 2: Ergebnisse der Bestimmung von Oberflächenreibung und Klebkraftdepression sowie die Veränderung der Abzugskräfte (tesa 7475 und tesa 7476) als Funktion des Additivgehalts

| Beispiel | Oberflächenreibung [Note][1] | Klebkraftdepression 7475 [%] | Trennwert 7475 [cN/cm] | Linerstrukturierung [%] [2] | Strukturübertrag [%] [3] |
|---|---|---|---|---|---|
| #1* | 6 | 5,3 | 10,4 | 0,5 | 0,2 |
| #2 | 5 | 2,4 | 7,5 | 3,3 | 2,6 |
| #3 | 4 | 5,2 | 5,9 | 0,1 | 0,0 |
| #4 | 3 | 7,2 | 9,4 | 0,1 | 0,0 |
| #5 | 1 | 25,9 | 7,0 | 2,5 | 0,1 |
| #6 | 5 | 0,7 | 6,4 | 0,2 | 0,8 |
| #7 | 4 | 1,8 | 5,6 | 2,6 | 0,2 |
| #8 | 2 | 12,2 | 5,7 | 0,0 | 0,0 |
| #9* | 6 | 0,0 | 10,1 | 1,6 | 0,2 |
| #10 | 3 | 6,8 | 4,5 | 1,1 | 3,0 |
| #11 | 5 | 0,0 | 8,2 | 2,0 | 0,7 |
| #12 | 3 | 4,6 | 4,2 | 0,2 | 2,5 |

\* nicht erfindungsgemäß
[1] Note 1: sehr angenehmes Hautgefühl, Note 6: sehr unangenehmes Hautgefühl, Schmerzen
[2] relativer Anteil Partikel in Gesamtoberfläche Liner (ermittelt aus mikroskopischen Aufnahmen)
[3] relativer Anteil durch Partikel strukturierte Substratoberfläche (ermittelt aus mikroskopischen Aufnahmen)

Die in Tabelle 2 aufgeführten Ergebnisse zeigen, dass durch den Zusatz eines Additivs in Form von Triethylsilan oder Tributylsilan der Reibungskoeffizient des jeweiligen Releaseliners gegenüber einem Releaseliner, welcher kein Additiv enthält, abgesenkt werden kann. Durch Erhöhung der Menge an Triethylsilan oder Tributylsilan kann sowohl die Trennleistung als auch der Reibungskoeffizient weitergehend verringert und damit die Eigenschaften des Liners den jeweiligen Anwendungszweck angepasst werden. Darüber hinaus tritt bei Zusatz des Additivs keine oder nur eine sehr geringe Klebekraftdepression auf, so dass bei Verwendung des Additivs der Silikonübertrag aus der Silikonschicht des Releaseliners auf die Haftklebemasse des Klebebands zuverlässig vermindert bzw. verhindert wird. Weiterhin wird durch den Zusatz des Additivs eine glatte Lineroberfläche erreicht, so dass kein Strukturübertrag auf die Haftklebemasse des Klebebands stattfindet. Die in Tabelle 2 angegebenen geringen Werte für die Linerstrukturierung und den Strukturübertrag entstehen durch den Eintrag von Fremdpartikeln während der Probenvorbereitung. Bei Verwendung von Partikelhaltigen Releaselinern werden hingegen signifikant höhere Werte für die Linerstrukturierung und den Strukturübertrag erhalten (siehe Tabelle 3).

**Vergleichsbeispiel 1: Silikonsystem mit nicht-erfindungsgemäßem Additiv**

Als Silikonsystem wurde das folgende additionsvernetzende Silikonsystem verwendet: 18,06 g PDMS-basiertes Release-Basispolymer SL 100 (Komponente a), 1,54 g Si-H-Vernetzer Syl-Off 7672 (Komponente b) sowie 0,40 g Platin-Katalysator Syl-Off 4000 (Komponente d). Zu diesem System wurden 0,51 g PMMA-Partikel gegeben und die Mischung wurde homogenisiert.

Die Silikonzusammensetzung wurde mit einer Laborstreichmaschine mit einem Silikonauftrag von 1,0 $g/m^2$ auf ein Glassine Papier (Silca ind. 2S white SCO 90 g der Firma Ahlström) beschichtet. Die beschichteten Proben wurden 30 s im Ofen bei 160 °C vernetzt. Anschließend wurden die Trennwerte mit den Testbändern tesa 7475 und tesa 7476, sowie die Klebkraftdepression und das Reibungsverhalten der Liner wie oben beschrieben bewertet (siehe Tabelle 3).

Tabelle 3: Ergebnisse der Bestimmung von Oberflächenreibung und Klebkraftdepression sowie die Veränderung der Abzugskräfte (tesa 7475 und tesa 7476) als Funktion des Additivgehalts

| Oberflächen-reibung [Note] [1] | Klebkraft-depression 7475 [%] | Trennwert 7475 [cN/cm] | Linerstruktu-rierung [%] [2] | Strukturübertrag [%] [3] |
|---|---|---|---|---|
| 3 | 0,0 | 8,5 | 19,0 | 18,1 |

[1] Note 1: sehr angenehmes Hautgefühl, Note 6: sehr unangenehmes Hautgefühl, Schmerzen

[2] relartiver Anteil Partikel in Gesamtoberfläche Liner

[3] relativer Anteil durch Partikel strukturierte Substratoberfläche

Der Zusatz des nicht erfindungsgemäßen Additivs in Form von PMMA-Partikeln führt zwar zu einem verringerten Reibungskoeffizienten sowie zu einer geringen Klebkraftdepression, jedoch weisen die Liner aufgrund des Einsatzes von Partikeln eine Strukturierung auf, welche sich auf die Haftklebemasse des Klebebands überträgt und im Verarbeitungsprozess oder bei der Anwendung unerwünscht ist.

**Patentansprüche**

1. Zusammensetzung zur Herstellung einer Trennbeschichtung, insbesondere zur Ausrüstung eines Releaseliners, enthaltend:

   a) mindestens ein Organopolysiloxan mit einem gewichtsmittleren Molekulargewicht $M_w$ von 500 bis 100.000 g/mol, welches mindestens eine Diorganosiloxaneinheit und mindestens zwei Silizium-gebundene Alkenylgruppen enthält, wobei das gewichtsmittlere Molekulargewicht $M_w$ durch Gelpermeationschromatographie in Toluol bei 23 °C und einer Flussrate von 1,0 ml/min mittels eines modifizierten Styrol-Divinylbenzol-Copolymer-Netzwerkes als Säulenmaterial und Polydimethylsiloxan als internem Standard bestimmt wird,
   b) mindestens eine zur Vernetzung von Alkenylgruppen enthaltender Organopolysiloxane geeignete Verbindung, welche mindestens zwei Silizium-gebundene Wasserstoffatome enthält,
   c) mindestens ein Alkylsilan der Formel $H\text{-}SiR_3$, worin R für eine lineare oder verzweigte $C_1$-$C_{10}$-Kohlenwasserstoffgruppe steht, und
   d) mindestens einen Katalysator.

2. Zusammensetzung nach Anspruch 1, **dadurch gekennzeichnet, dass** das Organopolysiloxan a) ein gewichtsmittleres Molekulargewicht $M_w$ von 1.000 bis 60.000 g/mol, aufweist, wobei das gewichtsmittlere Molekulargewicht $M_w$ durch Gelpermeationschromatographie in Toluol bei 23 °C und einer Flussrate von 1,0 ml/min mittels eines modifizierten Styrol-Divinylbenzol-Copolymer-Netzwerkes als Säulenmaterial und Polydimethylsiloxan als internem Standard bestimmt wird

3. Zusammensetzung nach einem der Ansprüche 1 oder 2, **dadurch gekennzeichnet, dass** der Rest R für eine lineare $C_1$-$C_{10}$-Kohlenwasserstoffgruppe, insbesondere für eine lineare $C_2$-$C_8$-Kohlenwasserstoffgruppe, steht.

4. Zusammensetzung nach einem der vorangehenden Ansprüche, **dadurch gekennzeichnet, dass** die Zusammensetzung die Komponente c) in einem Silananteil von 20 bis 80 mol-%, vorzugsweise von 30 bis 70 mol.-%, bevorzugt von 40 bis 70 mol.-%, insbesondere von 50 bis 70 mol.-%, jeweils bezogen auf den molaren Gesamtgehalt an Si-H-Gruppen der Komponenten b) und c), enthält.

5. Zusammensetzung nach einem der vorangehenden Ansprüche, **dadurch gekennzeichnet, dass** die Zusammensetzung die Komponente c) in einer Gesamtmenge von 1 bis 15 Gewichtsteilen, vorzugsweise von 2 bis 12 Gewichtsteilen, bevorzugt von 3 bis 10 Gewichtsteilen, insbesondere von 4 bis 9 Gewichtsteilen, jeweils bezogen auf die Summe der Komponenten a), b) und c) von 100 Gewichtsteilen, enthält.

6. Zusammensetzung nach einem der vorangehenden Ansprüche, **dadurch gekennzeichnet, dass** die Zusammensetzung die Komponente a) in einer Gesamtmenge von 87 bis 92 Gewichtsteilen und die Komponente b) in einer Gesamtmenge von 2 bis 8 Gewichtsteilen, jeweils bezogen auf die Summe der Komponenten a), b) und c) von 100 Gewichtsteilen, enthält.

7. Zusammensetzung nach einem der vorangehenden Ansprüche, **dadurch gekennzeichnet, dass** der Katalysator ausgewählt ist aus Platin- oder Rhodiumkatalysatoren und bevorzugt in einer Gesamtmenge von 40 bis 600 ppm, berechnet als Platin- oder Rhodiummetall und bezogen auf die Summe der Komponenten a), b) und c) von 100 Gewichtsteilen, eingesetzt wird.

8. Zusammensetzung nach einem der vorangehenden Ansprüche, **dadurch gekennzeichnet, dass** die Zusammensetzung lösungsmittelfrei ist.

9. Releaseliner, enthaltend eine vernetzte Zusammensetzung nach mindestens einem der Ansprüche 1 bis 8 als Trennschicht.

10. Releaseliner nach Anspruch 9, **dadurch gekennzeichnet, dass** die Trennschicht eine Schichtdicke von 0,1 bis 5,0 $\mu$m, vorzugsweise von 0,2 bis 2,5 $\mu$m, insbesondere von 0,4 bis 2,0 $\mu$m, aufweist.

11. Releaseliner nach einem der Ansprüche 9 oder 10, **dadurch gekennzeichnet, dass** die Trennschicht keine Oberflächenstruktur aufweist.

12. Klebeband, enthaltend mindestens eine Haftklebemasse sowie mindestens einen Releaseliner nach einem der Ansprüche 9 bis 11, wobei die Haftklebemasse ein- oder beidseitig mit dem Releaseliner eingedeckt ist.

13. Klebeband nach Anspruch 12, **dadurch gekennzeichnet, dass** Haftklebemasse eine Klebkraft-Depression (KKD) von 0 bis 30 %, vorzugsweise von 0 bis 20%, insbesondere von 0 bis 15 % aufweist, wobei die Klebkraft-Depression (KKD) auf einer Stahloberfläche gegenüber einer Referenzprobe durch eine Zugprüfung (Maschinengeschwindigkeit 300 mm/min, Abzugswinkel 180°) anhand folgender Formel

$$KKD = \frac{Klebkraft_{Referenz} - Klebkraft_{Probe}}{Klebkraft_{Referenz}} \cdot 100\,\%$$

bestimmt wird.

14. Verwendung eines Alkylsilans der Formel $H\text{-}SiR_3$, worin R für eine lineare oder verzweigte $C_1\text{-}C_{10}$-Kohlenwasserstoffgruppe steht, in Silikon-haltigen Releaselinern zur Verringerung des Reibungskoeffizienten der Trennschicht.

**Claims**

1. Composition for producing a release coating, especially for equipping a release liner, comprising:

   a) at least one organopolysiloxane having a weight-average molecular weight $M_w$ of 500 to 100 000 g/mol which contains at least one diorganosiloxane unit and at least two silicon-bonded alkenyl groups, the weight-average molecular weight $M_w$ being determined by gel permeation chromatography in toluene at 23°C with a flow rate of 1.0 ml/min by means of a modified styrene-divinylbenzene copolymer network as column material and of polydimethylsiloxane as internal standard,
   b) at least one compound which is suitable for crosslinking organopolysiloxanes containing alkenyl groups and which contains at least two silicon-bonded hydrogen atoms,
   c) at least one alkylsilane of the formula $H\text{-}SiR_3$, in which R is a linear or branched $C_1\text{-}C_{10}$ hydrocarbon group, and
   d) at least one catalyst.

2. Composition according to Claim 1, **characterized in that** the organopolysiloxane a) has a weight-average molecular weight $M_w$ of 1000 to 60 000 g/mol, the weight-average molecular weight $M_w$ being determined by gel permeation chromatography in toluene at 23°C with a flow rate of 1.0 ml/min by means of a modified styrene-divinylbenzene copolymer network as column material and of polydimethylsiloxane as internal standard.

3. Composition according to one of Claims 1 or 2, **characterized in that** the radical R is a linear $C_1\text{-}C_{10}$ hydrocarbon group, more particularly a linear $C_2\text{-}C_8$ hydrocarbon group.

4. Composition according to any of the preceding claims, **characterized in that** the composition contains component c) in a silane fraction of 20 to 80 mol%, preferably of 30 to 70 mol%, more preferably of 40 to 70 mol%, more particularly of 50 to 70 mol%, based in each case on the total molar amount of Si-H groups in components b) and c).

5. Composition according to any of the preceding claims, **characterized in that** the composition contains component c) in a total amount of 1 to 15 parts by weight, preferably of 2 to 12 parts by weight, more preferably of 3 to 10 parts by weight, more particularly of 4 to 9 parts by weight, based in each case on the sum total of components a), b) and c) of 100 parts by weight.

6. Composition according to any of the preceding claims, **characterized in that** the composition contains component a) in a total amount of 87 to 92 parts by weight, and component b) in a total amount of 2 to 8 parts by weight, based in each case on the sum total of components a), b) and c) of 100 parts by weight.

7. Composition according to any of the preceding claims, **characterized in that** the catalyst is selected from platinum or rhodium catalysts and is used preferably in a total amount of 40 to 600 ppm, calculated as platinum or rhodium metal and based on the sum total of components a), b) and c) of 100 parts by weight.

8. Composition according to any of the preceding claims, **characterized in that** the composition is solvent-free.

9. Release liner comprising a crosslinked composition according to at least one of Claims 1 to 8 as release layer.

10. Release liner according to Claim 9, **characterized in that** the release layer has a layer thickness of 0.1 to 5.0 $\mu$m, preferably of 0.2 to 2.5 $\mu$m, more particularly of 0.4 to 2.0 $\mu$m.

11. Release liner according to one of Claims 9 or 10, **characterized in that** the release layer does not have a surface structure.

12. Adhesive tape comprising at least one pressure-sensitive adhesive and also at least one release liner according to any of Claims 9 to 11, where the pressure-sensitive adhesive is lined with the release liner on one or both sides.

13. Adhesive tape according to Claim 12, **characterized in that** pressure-sensitive adhesive has a peel adhesion depression (PAD) of 0 to 30%, preferably of 0 to 20%, more particularly of 0 to 15%, the peel adhesion depression (PAD) being determined on a steel surface relative to a reference sample by a tensile test (machine speed 300 mm/min, take-off angle 180°) using the following formula

$$PAD = \frac{Peel\ adhesion_{Reference} - Peel\ adhesion_{Sample}}{Peel\ adhesion_{Reference}} \cdot 100\ \%$$

14. Use of an alkylsilane of the formula $H\text{-}SiR_3$, in which R is a linear or branched $C_1\text{-}C_{10}$ hydrocarbon group, in silicone-containing release liners for reducing the friction coefficient of the release layer.

**Revendications**

1. Composition pour la préparation d'un revêtement antiadhésif, en particulier pour l'apprêtage d'une doublure de libération, contenant :

a) au moins un organopolysiloxane doté d'un poids moléculaire moyen en poids $M_w$ de 500 à 100 000 g/mole, qui contient au moins un motif de type diorganosiloxane et au moins deux groupes alcényle liés à silicium, le poids moléculaire moyen en poids $M_w$ étant déterminé par chromatographie à perméation de gel dans le toluène à 23 °C et à un débit de 1,0 ml/min au moyen d'un réseau de copolymère de styrène-divinylbenzène modifié en tant que matériau de colonne et d'un polydiméthylsiloxane en tant que référence interne,
b) au moins un composé approprié pour la réticulation d'organopolysiloxanes contenant des groupes alcényle, qui contient au moins deux atomes d'hydrogène liés à silicium,
c) au moins un alkylsilane de formule $H\text{-}SiR_3$, dans laquelle R représente un groupe hydrocarboné linéaire ou ramifié en $C_{1\text{-}10}$, et
d) au moins un catalyseur.

**2.** Composition selon la revendication 1, **caractérisée en ce que** l'organopolysiloxane a) présente un poids moléculaire moyen en poids $M_w$ de 1 000 à 60 000 g/mole, le poids moléculaire moyen en poids $M_w$ étant déterminé par chromatographie à perméation de gel dans le toluène à 23 °C et à un débit de 1,0 ml/min au moyen d'un réseau de copolymère de styrène-divinylbenzène modifié en tant que matériau de colonne et d'un polydiméthylsiloxane en tant que référence interne.

**3.** Composition selon l'une quelconque des revendications 1 et 2, **caractérisée en ce que** le radical R représente un groupe hydrocarboné linéaire en $C_{1-10}$, en particulier représente un groupe hydrocarboné linéaire en $C_{2-8}$.

**4.** Composition selon l'une quelconque des revendications précédentes, **caractérisée en ce que** la composition contient le composant c) en une proportion de silane de 20 à 80 % en moles, de préférence de 30 à 70 % en moles, préférablement de 40 à 70 % en moles, en particulier de 50 à 70 % en moles, à chaque fois par rapport à la teneur totale molaire de groupes Si-H des composants b) et c).

**5.** Composition selon l'une quelconque des revendications précédentes, **caractérisée en ce que** la composition contient le composant c) en une quantité totale de 1 à 15 parties en poids, de préférence de 2 à 12 parties en poids, préférablement de 3 à 10 parties en poids, en particulier de 4 à 9 parties en poids, à chaque fois par rapport à la somme des composants a), b) et c) de 100 parties en poids.

**6.** Composition selon l'une quelconque des revendications précédentes, **caractérisée en ce que** la composition contient le composant a) en une quantité totale de 87 à 92 parties en poids et le composant b) en une quantité totale de 2 à 8 parties en poids, à chaque fois par rapport à la somme des composants a), b) et c) de 100 parties en poids.

**7.** Composition selon l'une quelconque des revendications précédentes, **caractérisée en ce que** le catalyseur est choisi parmi des catalyseurs au platine ou des catalyseurs au rhodium et est préférablement utilisé en une quantité totale de 40 à 600 ppm, calculée en tant que métal de platine ou de rhodium et par rapport à la somme des composants a), b) et c) de 100 parties en poids.

**8.** Composition selon l'une quelconque des revendications précédentes, **caractérisée en ce que** la composition est exempte de solvant.

**9.** Doublure de libération, contenant une composition réticulée selon au moins l'une des revendications 1 à 8 en tant que couche de séparation.

**10.** Doublure de libération selon la revendication 9, **caractérisée en ce que** la couche de séparation présente une épaisseur de couche de 0,1 à 5,0 $\mu$m, de préférence de 0,2 à 2,5 $\mu$m, en particulier de 0,4 à 2,0 $\mu$m.

**11.** Doublure de libération selon l'une quelconque des revendications 9 et 10, **caractérisée en ce que** la couche de séparation ne présente aucune structure de surface.

**12.** Ruban adhésif, contenant au moins une masse autoadhésive ainsi qu'au moins une doublure de libération selon l'une quelconque des revendications 9 à 11, la masse autoadhésive étant recouverte sur un côté ou sur les deux côtés par la doublure de libération.

**13.** Ruban adhésif selon la revendication 12, **caractérisé en ce que** la masse autoadhésive présente une dépression de pouvoir adhésif (KKD) de 0 à 30 %, de préférence de 0 à 20 %, en particulier de 0 à 15 %, la dépression de pouvoir adhésif (KKD) étant déterminée sur une surface d'acier par rapport à un échantillon de référence par un test de traction (vitesse machine 300 mm/min, angle de tirage 180°) au moyen de la formule suivante

$$KKD = ((pouvoir\ adhésif_{référence} - pouvoir\ adhésif_{échantillon}) \cdot 100\ \%)/pouvoir\ adhésif_{référence}.$$

**14.** Utilisation d'un alkylsilane de formule $H\text{-}SiR_3$, dans laquelle R représente un groupe hydrocarboné linéaire ou ramifié en $C_{1-10}$, dans des doublures de libération contenant une silicone pour la réduction du coefficient de frottement de la couche de séparation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6274213 B1
- DE 60001779 T2
- EP 0168713 B1
- DE 3820294 C1
- US 4725630 A1
- DE 3316166 C1
- EP 202507 B1
- WO 2010022154 A2

- EP 0903385 B1
- US 20050074573 A1
- EP 1010727 A2
- US 5520978 A
- US 5432006 A
- EP 0446030 A2
- US 2012322937 A1

**In der Beschreibung aufgeführte Nicht-Patentliteratur**

- Handbook of Pressure Sensitive Adhesive Technology. Satas & Associates, 1999